## Europäisches Patentamt
## European Patent Office
## Office européen des brevets

(11) Veröffentlichungsnummer: **0 152 020**
**B1**

(12) **EUROPÄISCHE PATENTSCHRIFT**

(45) Veröffentlichungstag der Patentschrift: **11.04.90**

(51) Int. Cl.⁵: **B 23 D 31/00**, B 23 D 15/06, B 23 D 33/04

(21) Anmeldenummer: **85101001.7**

(22) Anmeldetag: **31.01.85**

(54) **Verfahren und Vorrichtung zum Trennschneiden von flächigen Werkstücken, beispielsweise Blechen.**

(30) Priorität: **07.02.84 DE 3404234**

(43) Veröffentlichungstag der Anmeldung:
**21.08.85 Patentblatt 85/34**

(45) Bekanntmachung des Hinweises auf die
Patenterteilung:
**11.04.90 Patentblatt 90/15**

(84) Benannte Vertragsstaaten:
**AT BE CH DE FR GB IT LI LU NL SE**

(56) Entgegenhaltungen:
**BE-A- 462 011**
**DE-A-2 717 508**
**GB-A-1 535 815**
**US-A-3 830 122**

(73) Patentinhaber: **Siegwart, Emil**
**Untere Hofwiesen**
**D-6605 Friedrichsthal (DE)**

(72) Erfinder: **Siegwart, Emil**
**Untere Hofwiesen**
**D-6605 Friedrichsthal (DE)**

(74) Vertreter: **Eitle, Werner, Dipl.-Ing. et al**
**Hoffmann, Eitle & Partner Patentanwälte**
**Arabellastrasse 4**
**D-8000 München 81 (DE)**

Courier Press, Leamington Spa, England.

## Beschreibung

Die Erfindung betrifft ein Verfahren und eine Vorrichtung zum Trennschneiden von flachigen Werkstucken, beispielsweise Blechen, mit einem Paar von scherenartig arbeitenden, zur Schneidebene geneigte Schneidkanten aufweisenden Trennschneidmessern, welche unter Zwischenlage des zu schneidenden Werkstucks mit ihren Schneidkanten bis zur gegenseitigen Uberlappung periodisch wiederkehrend aufeinanderzu- und voneinanderwegbewegt werden.

Bei derartigen Verfahren und Vorrichtungen ist die Schnittrichtung der beiden sich aufeinander zu bewegenden Messer immer die Projektion der Längsrichtung ihrer Schneidkanten auf die Schneidebene. Da bei den in der Praxis bekannten Verfahren und Vorrichtungen die Schneidkanten der Messer in ihrer Ausrichtung unverändert bleiben, muß beim Schneiden von Kurven, Bögen oder Ecken das Werkstück jeweils so gedreht werden, daß die Linie des an diesem Werkstück vorzunehmenden neuen Teilschnittes sich parallel zu den Messerschneidkanten erstreckt.

Der Erfindung liegt daher die Aufgabe zugrunde, bei einem Verfahren bzw. einer Vorrichtung der eingangs genannten Gattung das Werkstück beim Schneiden von Kurven, Bögen oder Ecken nicht in die für den jeweiligen nächsten Teilschnitt gewünschte Richtung gegenüber den Messern drehen zu müssen, um einen ggfs. computergesteuerten automatischen Vorschub des Werkstücks durch die Vorrichtung hindurch ermöglichen zu können.

Zur Lösung dieser Aufgabe werden bei dem Trennschneidverfahren das Werkstück gegenüber den in Scherrichtung im wesentlichen unbewegbaren Trennschneidmessern im wesentlichen ohne Änderung seiner Ausrichtung in einem Koordinatensystem in Richtung der gewünschten Schnittlinie bewegt und die Messer mit ihrer Schneidkante um eine zur Schneidebene senkrechte ortsfeste Achse in die jeweilige, beim nächsten Trennschnitt gewünschte Scherrichtung gedreht, welche Achse durch die zuerst in das Werkstück eintauchende Stelle der geneigten Schneidkanten hindurchgeht. Dabei werden zweckmäßig die Einstellung der Vorschubrichtung der Führung für den Vorschub des Werkstücks entsprechend der gewünschten Schnittlinie und die Einstellung der Messer mit ihren Schneidkanten in diese Schneidrichtung gekoppelt.

Beim erfindungsgemäßen Verfahren wird also so vorgegangen, daß durch Koordinatenführung des Werkstücks die vorderen Schnittkanten der Messer, mit welchen diese voraus in das Werstück eintauchen, sich in jeder gewünschten Schnittrichtung an der Stelle der Koordinatenanfangswerte für den jeweils vorzunehmenden neuen Teilschnitt befinden und die Schnittlänge sich jeweils in Richtung der nächsten Koordinatenwerte fortsetzt.

Bei einer bevorzugten Ausführungsform wird die Drehung der Messer in die jeweilige neue Schneidrichtung vorgenommen, wenn bei ihrer periodischen Aufeinanderzu- und Voneinanderwegbewegung mindestens ein, zweckmäßig jedoch beide Messer aus dem Werkstück herausbewegt sind oder wenn sie aus ihrer gegenseitigen Überlappung herausgetreten sind. Durch die vorerwähnten Verfahrensmaßnahmen wird erreicht, daß jeder noch so kleine Teilschnitt völlig neu und unabhängig vom vorangegangenen Teilschnitt am Werkstück angesetzt wird, so daß jede beliebige Schnittlinie, auch scharfwinklige Eckenschnitte ohne Verrundung oder scharfe Kurven mit kleinstem Kurvenradius möglich sind, wobei das zu schneidende Werkstück völlig spannungsfrei gegenüber den Messern vorgeschoben werden kann. Bei vollkommener Herausbewegung beider Messer aus dem Werkstück wird außerdem eine freie berührungslose Vorschubbewegung des Werkstücks gegenüber den Messern möglich. Diese Vorschubbewegung kann so gesteuert werden, daß sie nur bei aus dem Werkstück herausgezogenen Messern erfolgt. Es ist jedoch auch eine Verfahrensweise denkbar, bei der die Vorschubbewegung des Werkstücks kontinuierlich erfolgt. In diesem Falle ist es vorteilhaft, wenn die Messer während der Zeitdauer, in der sie während ihrer Bewegungsperiode in das Werkstück eingreifen, mit dem Werkstück in Scherrichtung mitbewegt werden, bis sie nach Beendigung des Teilschnittes wieder aus dem Werkstück heraustreten, worauf sie in ihre Ausgangsstellung zurückbewegt werden.

Das erfindungsgemäße Verfahren gewährleistet völlig abfallfreie Trennschnitte, die mit einer großen Schergeschwindigkeit durchgeführt werden können, so daß auch praktisch spielfrei ineinanderpassende Teile mit einem einzigen Schnitt hergestellt werden können. Bei Messern mit sich schräg aufeinanderzubewegenden Schneidkanten wird je nach Überlappungstiefe der Messer eine unterschiedliche Länge der Schnitte erhalten, so daß es bei entsprechend kleiner Überlappung möglich ist, nur mit Schnittlängen von ca. 1 mm eine facettenartige Schnittfolge zu legen, die eine nahezu homogene Bogen- oder Kreisform der herzustellenden Schnittlinie ergibt.

Zweckmäßig wird bei dem erfindungsgemäßen Verfahren so vorgegangen, daß während einer periodischen Aufeinanderzu- und Voneinanderwegbewegung der Messer die Zeitdauer, während welcher mindestens ein Messer aus dem Werkstück herausbewegt ist, länger ist als diejenige, während der dieses Messer unter Überlappung mit dem anderen Messer in das Werkstück eingetaucht ist. Ferner wird zweckmäßig bei Kurvenschnitten die Überlappungstiefe der Messer um so geringer gehalten, je kleiner der Kurvenradius ist, um möglichst kontinuierliche Kurvenschnitte zu erhalten.

Zur Durchführung des erfindungsgemäßen Verfahrens dient eine Vorrichtung, die erfindungsgemäß eine Führung für die Bewegung des Werkstücks gegenüber den Messern im wesentlichen ohne Änderung seiner Ausrichtung in einem Koordinatensystem hat, wobei beide in Scherrichtung im wesentlichen unbewegbare Messer mit ihren Schneidkanten um eine Schneidebene senkrechte oder im wesentlichen senkrecht Ortsfeste Achse drehbar sind, welche durch die Spitze bzw. den Bereich der Schneidkanten der Messer hindurchgeht, mit welchen diese bei ihrer Aufeinanderzubewegung zuerst in das Werkstück eintauchen.

Weitere zweckmäßige bzw. vorteilhafte Weiterbildungen oder Ausführungsformen des erfindungsgemäßen Verfahrens sowie der erfindungsgemäßen Vorrichtung ergeben sich aus den Unteransprüchen.

In der Zeichnung sind besonders vorteilhafte Ausführungsbeispiele der zur Durchführung des erfindungsgemäßen Verfahrens dienenden Vorrichtung dargestellt, die im folgenden näher beschrieben werden:

Fig. 1 zeigt einen Vertikalschnitt durch die erfindungswesentlichen Teile des einen Ausführungsbeispiels,

Fig. 2 ist ein Schnitt nach Linie II—II in Fig. 1,

Fig. 3 ist ein Teilquerschnitt durch die erfindungswesentlichen Teile des zweiten Ausführungsbeispiels.

Fig. 4 zeigt einen vertikalschnitt durch die erfindungswesentlichen Teile eines dritten Ausführungsbeispiels.

Fig. 5 ist ein Schnitt nach Linie V—V in Fig. 4.

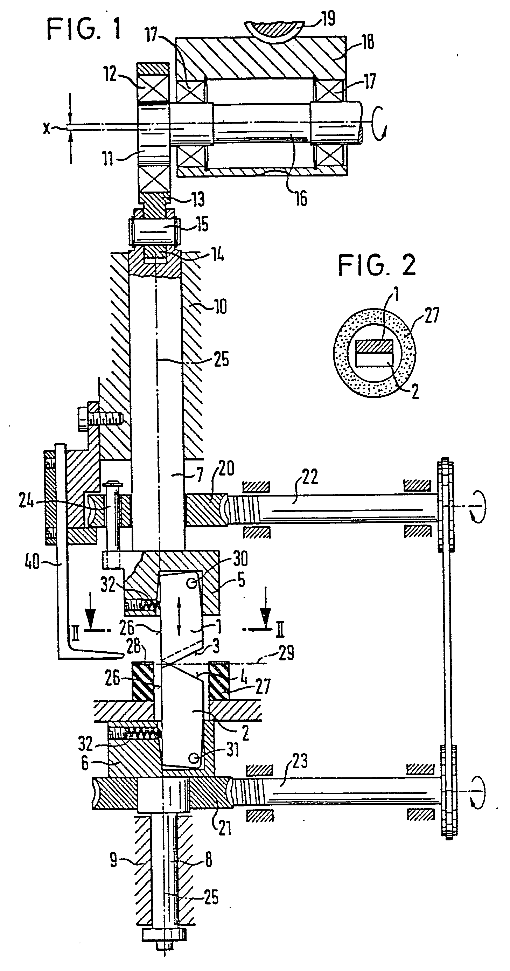

Bei der in Fig. 1 und 2 dargestellten Ausführungsform sind die beiden Schneidmesser 1, 2 senkrecht übereinander angeordnet und mit zueinander schrägen Schneidkanten 3, 4 versehen. Jedes dieser Messer ist in einer eigenen Messerhalterung 5, 6 gelagert, die am Ende je eines Schaftes 7, 8 befestigt sind. Während der Schaft 8 für das untere Messer 2 in einem zylindrischen Lager 9 drehbar, jedoch in Achsrichtung unverschiebbar gelagert ist, bildet der Schaft 7 des oberen Messers 1 einen in einem zylindrischen Lager 10 axial auf- und abbewegbaren Kolben, der dem Obermesser eine zur Durchführung des erfindungsgemäßen Trennschneidens erforderliche Auf- und Abbewegung gegenüber dem Untermesser vermittelt. An diesem auf- und abbewegbaren Schaft 7 ist die Messerhalterung 5 für das Obermesser um die Achse 25 drehbar gelagert. In der in Fig. 1 dargestellten unteren Totpunktlage ihrer Auf- und Abbewegung ist eine Überlappung der Messer 1, 2 im Bereich ihrer Spitzen gegeben, während in der oberen Totpunktlage des oberen Messers 1, die in Fig. 1 gestrichelt dargestellt ist, die Spitzen der beiden Messer einen Abstand voneinander haben, der etwa oder mindestens der Dicke des zu schneidenden Werkstücks, beispielsweise einer Blechtafel oder dergl. entspricht.

Zur Erzeugung der Auf- und Abbewegung des oberen Schaftes 7 dient eine Exzenterscheibe 11, auf der über ein Kugel- oder Rollenlager 12 ein Kurbelteil 13 sitzt, welches mit seinem Kurbelarm 14 über einen Kurbelzapfen 15 mit dem oberen Ende des Schaftes 7 verbunden ist. Die Exzenterscheibe 11 sitzt um das Maß x exzentrisch auf einer durch einen nicht dargestellten Motor angetriebenen Exzenterwelle 16. Bei Drehung dieser Welle 16 wird über die Exzenterscheibe 11 und das Kurbelteil 13 dem Schaft 7 eine Auf- und Abbewegung erteilt, wodurch das obere Messer 1 gegenüber dem unteren Messer 2 die eingangs erwähnte Auf- und Abbewegung durchführt, mit der das Schneiden des zu schneidenden Werkstückes vorgenommen wird.

Die Exzenterwelle 16 sitzt ihrerseits über Kugel- oder Rollenlager 17 in einem Schneckenexzenter 18, der über eine Schneckenwelle 19 in seiner Drehlage einstellbar ist. Durch Drehen des Schneckenexzenters 18 kann die in ihm gelagerte Exzenterwelle 16 in ihrere Höhenlage verändert werden, wodurch die Überlappungstiefe der beiden Messer 1, 2 sowie die Eintauchtiefe des Messers 1 in das zu schneidende Werkstück eingestellt werden kann.

Um die beiden Messer 1, 2 synchron mit ihren Schneidkanten 3, 4 in die jeweils gewünschte Scherrichtung drehen zu können, ist an jedem Schaft 7, 8 ein Schneckenrad 20, 21 mit zugehöriger Schnecke 22, 23 vorgesehen. Die beiden Schnecken sind für einen Synchronantrieb über ein Getriebe, eine Kette oder ein anderes Antriebselement, z.B. Zahnriemen oder dgl., miteinander zwangsgekoppelt.

Das untere Schneckenrad 21 ist mit dem drehbaren Schaft 8 fest verbunden, während der obere auf- und abbewegbare jedoch umdrehbare Schaft 7 mit dem oberen Schneckenrad 20 nicht fest verbunden sondern lose durch dieses hindurchragt. Um eine drehfeste Verbindung zwischen diesem Schneckenrad 20 und der am Schaft 7 drehbar gelagerten Messerhalterung 5 des Obermessers 1 zu erzielen, sitzt an dieser Messerhalterung mindestens ein Mitnehmerzapfen 24, der über eine in der Zeichnung nicht dargestellte Führungsbüchse in dem Schneckenrad 20 axial auf- und abbewgbar gelagert ist. Diese Ausbildung gewährleistet ein Mitdrehen der Messerhalterung mit dem Schneckenrad, ohne daß die Auf- und Abwärtsbewegung der Messerhalterung am Schaft 7 behindert wird.

Die Messer 1, 2 sind in ihren Messerhalterungen 5, 6 so gelagert, daß deren Drehachse 25 in der zur Messerspitze führenden senkrechten Vorderkante 26 der Messer liegt. Dadurch wird gewährleistet, daß die vorderen Schnittkanten der Messer in jeder Scherrichtung die Anfangskoordinaten der Schnittlinie bilden, wobei durch die Vorschubrichtung und die davon abhängige Drehungsstellung der Messer die Richtung des nächsten Teilschnittes bestimmt wird, die durch Koordinatensteuerung vorgegeben werden kann.

Zur Auflagerung des zu schneidenden Werkstückes im Bereich der Schneidmesser während des Schneidvorganges dient ein das untere Messer 2 umgebender Auflagerring 27 aus elastischem Material. Die Oberseite dieses Ringes ist mit einer verschleißfesten Metallabdeckung 28 versehen, über welche hinweg das zu schneidende Werkstück gegenüber den Messern in der gewünschten Scherrichtung vorgeschoben werden kann. Die Elastizität dieses Auflaggeringes 27 ist so bemessen, daß seine von der Oberseite der Metallabdeckung 28 gebildete Auflagerfläche ohne Belastung durch das Werkstück mindestens gleich hoch oder höher als die Schneidspitze des unteren Messers 2 bzw. der Schneidebene 29 liegt, bei aufliegendem Werkstück und senkrecht nach unten auf dieses Werkstück ausgeübtem Schneiddruck des oberen Messers 1 jedoch mit ihrer Auflagerfläche so weit unter die Schneidebene 29 gedrück werden kann, daß das untere Messer 2 in das Werkstück eintaucht. Beim Rückzug des oberen Messers 1 aus dem Werkstück heraus wird durch den federnden Auflaggering 27 das auf diesem aufliegende Werkstück so weit nach oben gedrückt, bis das untere Messer aus dem Werkstück herausgetreten ist. Der elastisch nachgiebige Auflaggerring kann auch von einer Gummimatte oder von an ihrer Oberseite eine Auflagerfläche aufweisenden Abstützfedern gebildet sein.

Zur Halterung und Führung des Werkstücks an dessen Oberseite ist ein Niederhalterarm 40 vorgesehen, gegen den sich das Werkstück mit seiner Oberseite abstützen kann und dessen Höhenlage zum Werkstück einstellbar ist.

Um ein Abstoppen des Werkstückvorschubes beim Eintauchen der Schneidmesser 1, 2 in das Werkstück zu verhindern, sind die beiden Messer 1, 2 um horizontale Achsen 30, 31 in den Messerhalterungen 5, 6 geringfügig in Richtung des Werkstückvorschubs hin- und herschwenkbar. Um diese Schwenkbarkeit der Messer nicht zu behindern, sind diese an ihren Vorder- und Hinterkanten sowie an ihrer Oberkante mit entsprechendem Spiel in ihren Messerhalterungen gelagert. Die Vorderkanten 26 der Messer werden über in den Messerhalterungen gelagerte Federelemente 32 so belastet, daß die Messer in ihre in Fig. 1 dargestellte senkrechte Ausgangsschwenkstellung gedrückt werden, die durch Anschlag der Hinterkanten der Messer gegen die Messerhalterung festgelegt ist. Wird nun während des Schneidvorgangs beim Eintauchen der Messer 1, 2 in das Werkstück dieses weiter in Scherrichtung vorgeschoben, können die Messer mit ihren Schneidkanten entgegen dem Druck der Federelemente 32 dem Werkstück folgen, bis sie am Ende ihres Schneidvorganges wieder aus dem Werkstück herausbewegt werden, worauf sie durch die Federelemente in ihre Ausgangsschwenkstellung zurückbewegt werden. Die Federkraft der Federelemente 32 muß dabei so bemessen sein, daß durch die Möglichkeit des Ausschwenkens der Messer um ihre Achsen 30 und 31 das Eintauchen der Messer mit ihren Schneidkanten in das Werkstück nicht gefährdet wird.

Wenn die Schneidmesser 1, 2 nicht wie bei dem in der Zeichnung dargestellten Ausführungsbeispiel seitlich um horizontale Achsen ausschwenkbar sondern starr bzw. fest in den Messerhalterungen 5, 6 z.B. durch Klemmring gelagert sind, ist ein Abstoppen des Werkstückvorschubes während des Zeitraumes notwendig, während dessen die Messer 1, 2 in das Werkstück eintauchen. Der Werkstückvorschub kann in diesem Falle nur erfolgen, solange die Messer mit ihren Schneidkanten sich außerhalb des Werkstücks befinden. Dies ergibt einen ruckartigen Werkstückvorschub, der entsprechend der Auf- und Abbewegung der Messer gesteuert sein muß.

Anstelle des Exzenterantriebs kann auch ein hydraulischer Antrieb für die Auf- und Abbewegung des oberen Drehschaftes 7 für das Obermesser 1 verwendet werden.

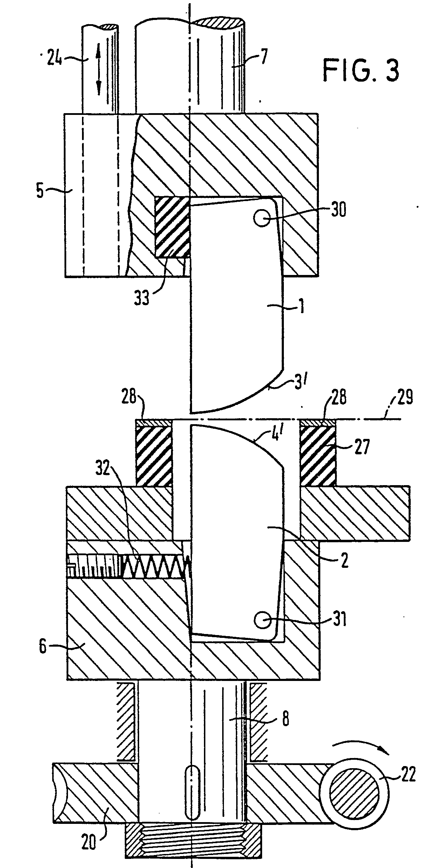

Bei dem in Fig. 3 gezeigten Ausführungsbeispiel sind die Schneidkanten 3', 4' der beiden Messer 1, 2 konkav zur Schneidebene 29 gewölbt. Dies hat bei der schwenkbaren Lagerung dieser Messer um ihre horizontalen Schwenkachsen 30, 31 ein abrollendes Eintauchen der Messer in das Werkstück bei dessen Vorschub während des Schneidvorganges zur Folge. Umgekehrt kann aber auch eine konkav gewölbte, also hohlgeschliffene Schneidkante unter Umständen zweckmäßig sein, insbesondere dann, wenn Trennschnitte mit engen Kurven oder scharfen Ecken ausgeführt werden sollen. Im übrigen gleicht die in Fig. 3 dargestellte Ausführungsform derjenigen in Fig. 1 und 2 mit der Ausnahme, daß das Federelement für das obere Messer 1 von einem Gummipfropfen 33 gebildet ist. In Fig. 3 ist aus Gründen der Übersichtlichkeit der Niederhaltearm 30 weggelassen.

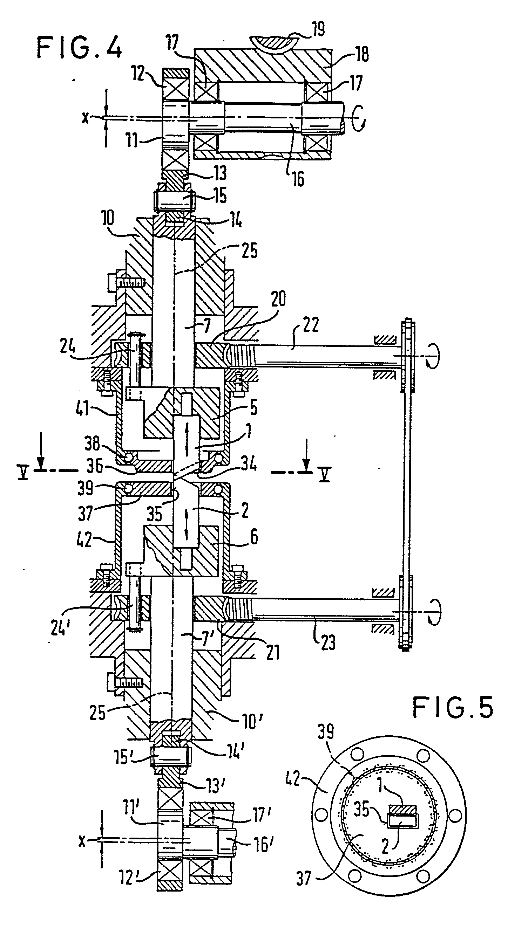

Bei dem in Fig. 4 und 5 dargestellten Ausführungsbeispiel ist nicht nur das Obermesser 1 sondern auch das Untermesser 2 auf- und abbewegbar. Zu diesem Zweck ist auch die Messerhalterung 6 für das Untermesser 2 drehbar am Schaft 7' gelagert, der wie ein Kolben in einem entsprechenden zylindrischen Lager 10' auf- und abbewegbar ist. Beide Schäfte 7, 7' sind an ihren den Messern 1, 2 abgewandten Enden jeweils mit einer Exzenterscheibe 11, 11' verbunden, auf der über ein Kugel- oder Rollenlager 12, 12' ein Kurbelteil 13, 13' sitzt, welches mit seinem Kurbelarm 14, 14' über einen Kurbelzapfen 15, 15' mit dem oberen Ende des Schaftes 7, 7' verbunden ist. Die Exzenterscheiben 11, 12 sitzen um das Maß x exzentrisch auf einer durch einen nicht dargestellten Motor angetriebenen Exzenterwelle 16, 16', die ihrerseits über Kugel- oder Rollenlager 17, 17' am Maschinengestell gelagert ist. Die Auf- und Abbewegung beider Trennmesser 1, 2 wird also bei diesem Ausführungsbeispiel in der gleichen Weise erzeugt wie bei dem oberen Trennmesser 1 des Ausführungsbeispiels gemäß Fig. 1 bis 3.

Auch die Drehbewegung der Trennmesser 1, 2 erfolgt bei diesem Ausführungsbeispiel in gleicher Weise wie bei dem Obermesser des Ausführungsbeispiels gemäß Fig. 1 und 2, also über von Schnecken 22, 23 angetriebene Schneckenräder 20, 21, deren Drehung über Mitnehmerzapfen 24, 24' auf die Messerhalterung 5, 6 übertragen wird. Die Trennmesser sind hier jedoch nicht kippbar über Kippachsen in den Messerhaltern gelagert, sondern in den Messerhaltern 5, 6 auswechselbar z.B. durch Klemmeinrichtungen befestigt.

Die beiden Trennmesser 1 2, ragen durch Durchbrüche 34, 35 in Drehscheiben 36, 37 hindurch, die über Kugellager 38, 39 in Aufhängungen 41, 42 drehbar gelagert sind, welche Aufhängungen am Maschinengestell befestigt sind. Bei Drehung der Trennmesser 1, 2 um die Achse 25 drehen sich die Drehscheiben ebenfalls um die Achse 25 mit. Die Drehscheiben dienen als Widerlager für das zwischen ihnen eingelegte zu schneidende Blech. Beim Zurückziehen der Trennmesser 1, 2 aus dem Blech heraus stützen sie das Blech beidseits, so daß dieses nicht von den Messern mitgezogen werden kann. Dies fördert das Herausgleiten der Messer aus dem im Blech erzeugten Trennschlitz, ohne daß in ihm Verhakungen oder Verspannungen entstehen. Dies geschieht unabhängig von der Drehstellung der Messer, da die Drehscheiben mit den Messern drehbar sind.

**Patentansprüche**

1. Verfahren zum Trennschneiden von flächigen Werkstücken, beispielsweise Blechen, mit einem Paar von scherenartig arbeitenden, zur Schneidebene (29) geneigte Schneidkanten (3, 3', 4, 4') aufweisenden Trennschneidmessern (1, 2), welche unter Zwischenlage des zu schneidenden Werkstücks mit ihren Schneidkanten bis zur gegenseitigen Überlappung periodisch wiederkehrend aufeinander zu- und voneinander wegbewegt werden, wobei das Werkstück gegenüber den in Scherrichtung im wesentlichen unbewegbaren Messern im wesentlichen ohne Änderung seiner Ausrichtung in einem Koordinatensystem in Richtung der gewünschten Schnittlinie bewegt wird und die Messer mit ihrer Schneidkante um eine zur Schneidebene senkrechte ortsfeste Achse in die jeweilige, beim nächsten Trennschnitt gewünschte Scherrichtung gedreht werden, welche Achse durch die zuerst in das Werkstück eindringende Stelle der geneigten Schneidkanten hindurchgeht.

2. Verfahren nach Anspruch 1, dadurch gekennzeichnet, daß die Drehung der Messer in die jeweilige neue Scherrichtung vorgenommen wird, wenn bei ihrer periodischen Aufeinanderzu- und Voneinanderwegbewegung mindestens ein Messer aus dem Werkstück herausbewegt ist.

3. Verfahren nach den Anspruch 1 und 2, dadurch gekennzeichnet, daß beide Messer bei ihrer Voneinanderwegbewegung vollständig aus dem Werkstück herausbewegt werden und in dieser Lage in die jeweilige neue Schneidrichtung gedreht werden.

4. Verfahren nach Anspruch 1, dadurch gekennzeichnet, daß mindestens ein Schneidmesser um das Maß des während seines Eintauchens in das Werkstück erfolgenden Werkstückvorschubs in Vorschubrichtung mitbewegt und beim anschließenden Herausziehen in Ausgangsstellung zurückbewegt wird.

5. Verfahren nach Anspruch 1, dadurch gekennzeichnet, daß während einer periodischen Aufeinanderzu- und Voneinanderwegbewegung der Messer die Zeitdauer, während welcher mindestens ein Messer aus dem Werkstück herausbewegt ist, länger ist als diejenige, während der dieses Messer unter Überlappung mit dem anderen in das Werkstück eingetaucht ist.

6. Verfahren nach Anspruch 5, dadurch gekennzeichnet, daß die Zeitdauer, während der sich mindestens ein Messer außerhalb des Werkstücks befindet, etwa dreimal so lang ist wie die Zeitdauer, in der dieses Messer in das Werkstück eingetaucht ist.

7. Verfahren nach Anspruch 1, dadurch gekennzeichnet, daß die beiden Messer nur so weit aufeinander zu bewegt werden, daß ihre Überlappungsteife nicht größer als das Vierfache, vorzugsweise nicht größer als das Zweifache der Dicke des zu schneidenden Werkstücks ist.

8. Verfahren nach Anspruch 7, dadurch gekennzeichnet, daß bei Kurvenschnitten die Überlappungslänge der Messer um so geringer gehalten wird, je kleiner der Kurvenradius ist.

9. Verfahren nach Anspruch 1, dadurch gekennzeichnet, daß eines der beiden Messer in Richtung ihrer Aufeinanderzu- und Voneinanderwegbewegung im wesentlichen feststehend ist und nur das andere Messer periodisch bewegt wird.

10. Verfahren nach Anspruch 9, dadurch gekennzeichnet, daß beim Herausbewegen des einen Messers aus dem Werkstück dieses Werkstück so weit vom anderen Messer wegbewegt wird, daß auch dieses Messer nicht mehr in das Werkstück eintaucht.

11. Vorrichtung zur Durchführung des Verfahrens nach einem oder mehreren der Ansprüche 1 bis 10, welche ein Paar von scherenartig arbeitenden, zur Schneidebene (29) geneigte Schneidkanten (3, 3', 4, 4') besitzende in Scherrichtung im wesentlichen unbewegbare Trennschneidmesser (1, 2) hat, die periodisch wiederkehrend bis zur gegenseitigen Überlappung aufeinanderzu- und voneinanderwegbewegbar sowie um eine zur Schneidebene (29) senkrechte oder im wesentlichen senkrechte, ortsfeste Achse (25) drehbar sind, die durch die Spitze bzw. den Bereich der Schneidkanten hindurchgeht, mit welchen die messer bei ihrer Aufeinanderzubewegung zuerst in das Werkstück eintauchen und welche Vorrichtung ferner eine Führung für die Bewegung des Werkstücks im wesentlichen ohne Änderung seiner Ausrichtung in einem Koordinatensystem gegenüber den Messern aufweist.

12. Vorrichtung nach Anspruch 11, dadurch gekennzeichnet, daß die Drehbewegung der Messer (1, 2) derart gesteuert ist, daß sie bei aufgehobener Überlappung der Messer erfolgt.

13. Vorrichtung nach Anspruch 12, dadurch gekennzeichnet, daß die Drehbewegung der Messer (1, 2) derart gesteuert ist, daß sie bei aus dem Werkstück herausgezogenen Messern erfolgt.

14. Vorrichtung nach Anspruch 12, dadurch gekennzeichnet, daß die Drehbewegung der Messer (1, 2) von der Vorschubrichtung der Führung für die Koordinatenbewegung des Werkstücks gesteuert wird.

15. Vorrichtung nach Anspruch 12, dadurch gekennzeichnet, daß mindestens eines der beiden Messer (1, 2) mit ihrer Schneidkante (3, 3', 4, 4') in Scherrichtung geringfügig hin- und herbewegbar ist.

16. Vorrichtung nach Anspruch 15, dadurch gekennzeichnet, daß das mit seiner Schneidkante (3, 3', 4, 4') in Scherrichtung geringfügig hin- und herbewegbare Messer um eine zur Schneidebene (29) parallele Achse schwenkbar gelagert ist.

17. Vorrichtung nach Anspruch 16, dadurch gekennzeichnet, daß das mit seiner Schneidkante (3, 3', 4, 4') hin- und herbewegbare Messer (1 oder 2) mit entsprechendem Spiel in einer Messerhalterung (5, 6) gelagert ist, die um eine zur Schneidebene (29) senkrechte Achse (25) drehbar ist, in welcher Messerhalterung dieses Messer durch ein elastisches Element (32) in eine Angangsschwenkstellung drückbar ist, aus der es durch den Vorschub des Werkstücks bei in diesem eingetauchten Messer gegen den Druck dieses Elements herausschwenkbar ist.

18. Vorrichtung nach Anspruch 11, dadurch gekennzeichnet, daß die Schneidkanten (3, 3', 4, 4') der Messer (1, 2) zur Schneidebene (29) hin oder von dieser weg gekrümmt sind.

19. Vorrichtung nach Anspruch 11, bei der die beiden (1, 2) Messer im wesentlichen senkrecht übereinanderstehen und in vertikaler Richtung aufeinanderzu- und voneinanderwegbewegbar sind, dadurch gekennzeichnet, daß nur das obere Messer (1) auf- und abbewegbar ist und eine Werkstückauflagefläche für das zu schneidende Werkstück vorgesehen ist, die durch den Schneiddruck des Obermessers auf das Werkstück bzw. durch Herauszeihen des Obermessers aus diesem federnd so weit auf- und abbewegbar ist, daß sich diese Oberfläche bei Druckausübung durch das Obermesser unterhalb des wirksamen Schneidbereichs der Schneidkante (4, 4') des Untermessers (2) und ohne Druckausübung des Obermessers oberhalb dieses Schneidbereichs liegt.

20. Vorrichtung nach Anspruch 11, dadurch gekennzeichnet, daß der Antrieb für die Drehbewegung der beiden Messer (1, 2) gekoppelt ist.

21. Vorrichtung nach Anspruch 13, dadurch gekennzeichnet, daß sich oberhalb oder seitlich oberhalb der federnden Auflagefläche für das Werkstück ein Niederhalter (30) befindet, der so angeordnet ist, daß er gegen die Oberfläche des Werkstückes wirksam wird.

**Revendications**

1. Procédé pour cisailler des pièces plates, par exemple, des tôles, au moyen d'une paire de lames de cisaille (1, 2) travaillant à la façon de ciseaux et qui présentent des arêtes tranchantes (3, 3', 4, 4') inclinées par rapport au plan de coupe, lames qui sont animées d'un mouvement de rapprochement et d'éloignement mutuel pé-riodiquement répété et qui atteint et portion de recouvrement mutuel des arêtes tranchantes avec interposition de la pièce à découper, dans laquel on déplace la pièce parallèlement à la ligne de coupe désirée, par rapport aux lames qui sont sensiblement immobiles dans la direction du cisaillage, sensiblement sans modification de l'orientation de cette pièce dans un système de coordonnées, et on fait tourner les lames, avec leur arête tranchantes, autour d'un axe fixe perpendiculaire au plan de coupe, pour les orienter dans la direction de cisaillage qui est désirée pour la coupe suivante, cet axe passant par le point de l'arête tranchante inclinée qui plonge le premier dans la pièce.

2. Procédé selon la revendication 1, caractérisé en ce que la rotation des lames qui amène ces lames dans la nouvelle position de cisaillage est exécutée à un moment où, ou cours de leur mouvement périodique de rapprochement et d'éloignement mutuel, au moins une lame est sortie de la pièce.

3. Procédé selon les revendications 1 et 2, caracterisé en ce que, lors de leur mouvement d'éloignement mutuel, les deux lames se dégagent entièrement de la pièce et que c'est dans cette position qu'elles sont amenées par rotation à la nouvelle direction de coupe.

4. Procédé selon la revendication 1, caractérisé en ce qu'au moins une lame est entraînée avec la pièce dans le sens de l'avance sur la distance d'avance de la pièce qui se produit pendant la plongée de cette lame dans la pièce, et que cette lame est ramenée en sens inverse à la position initiale lors de la sortie consécutive.

5. Procédé selon la revendication 1, caractérisé en ce que, pendant un mouvement périodique de rapprochement et d'éloignement des lames, le temps pendant lequel au moins une lame est dégagée de la pièce est plus long que le temps pendant lequel cette lame est plongée dans la pièce, à recouvrement avec l'autre lame.

6. Procédé selon la revendication 5, caractérisé en ce que le temps pendant lequel au moins une lame se trouve en dehors de la pièce est à peu près trois fois plus long que le temps pendant lequel cette lame est plongée dans la pièce.

7. Procédé selon la revendication 1, caractérisé en ce que les deux lames ne sont rapprochées l'une de l'autre que dans une mesure telle que leur profondeur de recouvrement ne soit pas supérieure au quadruple, de préférence pas supérieure au double de l'épaisseur de la pièce à découper.

8. Procédé selon la revendication 7, caractérisé en ce que, dans le cas de coupes courbes, la longueur de recouvrement des lames est limitée à une valeur d'autant plus faible que le rayon de courbure est plus petit.

9. Procédé selon la revendication 1, caracterisé en ce qu'une des deux lames est sensiblement fixe dans la direction du mouvement de rapprochement et d'éloignement de ces lames et que seule l'autre lame est animée d'un mouvement périodique.

10. Procédé selon la revendication 9, caractérisé en ce que, lors du mouvement de sortie d'une lame hors de la pièce, cette pièce est suffisamment éloignée de l'autre lame pour que cette autre lame ne plonge plus dans la pièce.

11. Machine pour la mise en oeuvre du procédé selon une ou plusieurs des revendications 1 à 10, qui comprend une paire de lames de cisaille travaillant à la façon de ciseaux, sensiblement immobiles dans la direction du cisaillage et qui possèdent des arêtes tranchantes (3, 3', 4, 4') inclinées par rapport au plan de coupe (29), lames qui sont animées d'un mouvement de rapprochement et d'éloignement mutuel périodiquement répété qui atteint une position de recouvrement mutuel des arêtes tranchantes, et qui peuvent aussi tourner autour d'un axe fixe (25) qui est perpendiculaire ou sensiblement perpendiculaire au plan de coupe (29) et qui passe par la pointe des arêtes tranchantes ou par la région de ces arêtes par laquelle les lames plongent initialement dans la pièce lors de leur mouvement de rapprochement, cette machine comprenant en outre un guide permettant à la pièce de se déplacer sensiblement sans modification de son orientation dans un système de coordonnées par rapport aux lames.

12. Machine selon la revendication 11, caractérisée en ce que le mouvement de rotation des lames (1, 2) est commandé de manière à se produire à un moment où le recouvrement des lames est disparu.

13. Machine selon la revendication 12, caractérisée en ce que le mouvement de rotation des lames (1, 2) est commandé de manière à se produire à un moment où les lames sont dégagées de la pièce.

14. Machine selon la revendication 12, caractérisée en ce que le mouvement de rotation des lames (1, 2) est commandé par le dispositif d'avance du guide utilisé pour le déplacement de la pièce.

15. Machine selon la revendication 12, caractérisée en ce qu'au moins une des deux lames (1, 2) peut se déplacer légèrement dans la direction du cisaillage au niveau de son arête tranchante (3, 3', 4, 4').

16. Machine selon la revendication 15, caractérisée en ce que la lame qui peut se déplacer légèrement en mouvement alternatif dans la direction du cisaillage au niveau de son arête tranchante (3, 3', 4, 4') est montée pour osciller autour d'un axe parallèle au plan de coupe (29).

17. Machine selon la revendication 16, caractérisée en ce que la lame (1 ou 2) qui peut se déplacer alternativement au niveau de son arête tranchante (3, 3', 4, 4') est montée avec un jeu approprié dans un porte-lame (5, 6) qui peut tourner autour d'un axe (25) perpendiculaire au plan de coupe (29), porte-lame dans lequel cette lame peut être repoussée par un élément élastique (32) dans une position initiale d'oscillation d'où elle peut être écartée par oscillation à l'encontre de la pression de cet élément, sous l'effet de l'avance de la pièce lorsque la lame est plongée dans cette pièce.

18. Machine selon la revendication 11, caractérisée en ce que les arêtes tranchantes (3, 3', 4, 4') des lames (1, 2) sont incurvées dans le sens qui s'éloigne du plan de coupe (29) ou dans le sens qui se rapproche de ce plan.

19. Machine selon la revendication 11, dans laquelle les deux lames (1, 2) sont disposées l'une au-dessus de l'autre, sensiblement à la verticale l'une de l'autre, et peuvent être aminées d'un mouvement de rapprochement et d'éloignement mutuel dans la direction verticale, caractérisée en ce que seule la lame supérieure (1) est mobile en mouvement montant et descendant et en ce qu'il est prévu une surface de portée de la pièce pour recevoir la pièce à découper, surface qui peut s'élever et s'abaisser élastiquement sous l'effet de la pression de coupe exercée sur la pièce par la lame supérieure ou sous l'effet de l'extraction de cette lame supérieure hors de cette pièce, dans une mesure suffisante pour que cette surface se trouve au-dessous de la région de coupe effective de l'arête tranchante (4, 4') de la lame inférieure (2) en présence d'une pression exercée par la lame supérieure, et qu'elle se trouve au-dessus de cette région de coupe en l'absence de pression exercée par la lame supérieure.

20. Machine selon la revendication 11, caractérisée en ce que les entraînements qui commandent le mouvement de rotation des deux lames (1, 2) sont couplés.

21. Machine selon la revendication 13, caractérisée en ce que, au-dessus ou latéralement au-dessus du niveau de la surface de portée élastique recevant la pièce, se trouve un presseur (30) qui est agencé de manière à agir sur la surface de la pièce.

## Claims

1. Method for cutting up flat workpieces, for example sheets, employing a pair of cutting blades (1, 2) operating like shears and having cutting edges (3, 3', 4, 4') inclined to the cutting plane (29) which when the workpiece to be cut is interposed are periodically and repeatedly moved toward and away from each other with their cutting edges until the latter mutually overlap, the workpiece being moved relative to the blades, which are substantially immovable in the shearing direction, substantially without alteration of its alignment in a coordinate system in the direction of the desired cutting line and the blades being rotated with their cutting edge about a fixed axis perpendicular to the cutting plane into the shearing direction desired for the next dividing cut, which axis passes through the point of the inclined cutting edges first penetrating the workpiece.

2. Method according to claim 1, characterised in that the rotation of the blades into the respective new cutting direction is performed during the periodic to and fro movement when at least one blade has moved out of the workpiece.

3. Method according to claims 1 and 2 characterised in that during their movement away from each other, the two blades are moved completely out of the workpiece and are rotated in that position into the respective new cutting direction.

4. Method according to claim 1 characterised in that at least one cutting blade is moved in the feed direction by the extent of the feed displacement of the workpiece occurring during its penetration of the workpiece and is moved back to the start position during the subsequent withdrawal.

5. Method according to claim 1 characterised in that during a periodic approaching and separating movement of the blades the duration during which at least one blade is moved out of the workpiece is longer than that during which this blade penetrates the workpiece during overlapping with the other.

6. Method according to claim 5 characterised in that the duration during which at least one blade is located outside the workpiece is approximately three times as long as the duration for which this blade penetrates the workpiece.

7. Method according to claim 1 characterised in that the two blades are to be moved over each other only to the extent that their degree of overlap is not greater than four times, preferably not greater than twice, the thickness of the workpiece to be cut.

8. Method according to claim 7 characterised in that with curved sections the smaller the radius of curvature, the smaller the length of overlap of the blades.

9. Method according to claim 1 characterised in that one of the two blades is substantially stationary in the direction of its approaching and separating movement and only the other blade is periodically moved.

10. Method according to claim 9 characterised in that upon withdrawal of the one blade from the workpiece, this workpiece is moved away from the other blade to an extent such that also this blade no longer penetrates the workpiece.

11. Device for carrying out the method according to one or more of claims 1 to 10 comprising a pair of cutting blades (1, 2) which are substantially immovable in the shearing direction, operate in shear fashion and have cutting edges (3, 3′, 4, 4′) inclined to the cutting plane (29), which cutting blades are periodically and repeatedly movable towards and away from each other to produce mutual overlapping and are rotatable about a fixed axis (25) perpendicular or substantially perpendicular to the cutting plane (29), which axis passes through the tips or the region of the cutting edges with which the blades penetrate the workpiece during their relative motion and which device furthermore has a guide for the movement of the workpiece substantially without change of its alignment in a coordinate system relative to the blades.

12. Device according to claim 11 characterised in that the rotational movement of the blades (1, 2) is controlled in such manner that it occurs upon clearing of overlapping of the blades.

13. Device according to claim 12 characterised in that the rotational movement of the blades (1, 2) is controlled in such manner that it occurs upon withdrawal of the blades from the workpiece.

14. Device according to claim 12 characterised in that the rotational movement of the blades (1, 2) is controlled by the feed direction of the guide for the coordinate movement of the workpiece.

15. Device according to claim 12 characterised in that at least one of the two blades (1, 2) is movable slightly to and fro with its cutting edge (3, 3′, 4, 4′) in the shearing direction.

16. Device according to claim 15 characterised in that the blade movable slightly to and fro in the shearing direction with its cutting edge (3, 3′, 4, 4′) is mounted for pivoting about an axis parallel to the cutting plane (29).

17. Device according to claim 16 characterised in that the blade (1 or 2) with its cutting edge (3, 3′, 4, 4′) movable to and fro is mounted with corresponding play in a blade holder (5, 6) which is rotatable about an axis (25) perpendicular to the cutting plane (29) in which blade holder this blade is pressable by an elastic element (32) into an initial pivot position from which it is pivotable against the pressure of this element by the feed of the workpiece when the blade is engaged therein.

18. Device according to claim 11 characterised in that the cutting edges (3, 3′, 4, 4′) of the blade (1, 2) are curved towards the cutting plane (29) or away therefrom.

19. Device according to claim 11 in which the two blades (1, 2) are substantially vertically superimposed and are movable in the vertical direction towards and away from each other, characterised in that only the upper blade (1) is movable to and fro and a workpiece support surface is provided for the workpiece to be cut, which surface is movable resiliently to and fro by the cutting pressure of the upper blade on the workpiece or by withdrawal of the upper blade therefrom to such an extent that upon exertion of pressure by the upper blade this upper surface lies beneath the effective cutting region of the cutting edge (4, 4′) of the lower blade (2) and without exertion of pressure of the upper blade above this cutting region.

20. Device according to claim 11 characterised in that the drive for the rotational movement of the two blades (1, 2) is coupled.

21. Device according to claim 13 characterised in that above or laterally above the resilient support surface for the workpiece is provided a press member (40) which is so arranged that it is effective against the upper surface of the workpiece.

FIG. 1

FIG. 2

FIG. 3

FIG.4

FIG.5